# EUROPEAN PATENT SPECIFICATION

(11) **EP 3 078 716 B1**
(45) Date of publication and mention of the grant of the patent: **20.03.2019**
(21) Application number: 14868264.4
(22) Date of filing: 03.12.2014
(51) Int. Cl.: C09D 127/18, B32B 27/38, C09D 5/00, C09D 163/00, B32B 27/32

(54) **AQUEOUS PRIMER COMPOSITION AND LAMINATE USING SAME**
WÄSSRIGE GRUNDIERUNGSZUSAMMENSETZUNG UND LAMINAT DAMIT
COMPOSITION AQUEUSE D'APPRÊT ET STRATIFIÉ UTILISANT CETTE DERNIÈRE

(30) Priority: 03.12.2013 JP 2013250486
(43) Date of publication of application: 12.10.2016
(73) Proprietor: AGC Inc., Tokyo 100-8405 (JP)
(72) Inventor: HOSHIKAWA, Jun, Tokyo 100-8405 (JP); TATE, Noriharu, Tokyo 100-8405 (JP); SUSA, Hitoshi, Tokyo 100-8405 (JP)
(74) Representative: Müller-Boré & Partner Patentanwälte PartG mbB
(86) International application number: PCT/JP2014/081950
(87) International publication number: WO 2015/083730

(56) References cited:
- WO-A1-2013/146078
- JP-A- S6 214 973
- JP-A- H07 108 218
- JP-A- H11 349 887
- JP-A- S54 100 447
- JP-A- 2006 206 637
- US-A- 3 111 426
- US-B1- 6 344 500

## Description

### TECHNICAL FIELD

The present invention relates to a liquid primer composition and a laminate using it.

### BACKGROUND ART

An ethylene/tetrafluoroethylene copolymer (hereinafter referred to also as "ETFE") is excellent in heat resistance, chemical resistance, weather resistance, gas barrier properties, and is used in various fields including semiconductor industry, automobile industry, chemical industry. Pelletized ETFE particles may be processed into various molded products by extrusion molding, injection molding, etc. Further, finer ETFE particles may be processed for coating or lining on the surface of a heat-resistant substrate by a powder coating method such as an electrostatic coating method, or a method such as a rotational molding method, and thus utilized for improvement in chemical resistance or protection of a metal surface of e.g. containers, tanks, pipings, joints.

In general, as compared with a perfluorinated fluororesin such as a polytetrafluoroethylene resin, ETFE has good adhesion properties to a substrate, and therefore, in many cases, it is applied directly on a substrate surface after applying surface roughening treatment such as sand blasting to the substrate surface. However, in recent years, an ETFE-coated article has been required to be used in a severer environment, and it is desired to improve the adhesion properties between ETFE and the substrate.

Under these circumstances, a powder primer composition employing a reactive ETFE having reactive groups in ETFE molecules, is known (e.g. Patent Document 1).

Further, a liquid primer composition employing a silane coupling agent in order to improve the adhesion properties between ETFE and a substrate, is known (e.g. Patent Document 2).

Still further, an attempt to mix an epoxy resin powder to a fluororesin powder, followed by heat-treatment at from 180 to 200°C, is known (e.g. Patent Document 3).

### PRIOR ART DOCUMENTS

### PATENT DOCUMENTS

Patent Document 1: JP-A-2006-206637
Patent Document 2: JP-A-2006-167689
Patent Document 3: US Patent No. 3,111,426

### DISCLOSURE OF INVENTION

### TECHNICAL PROBLEM

However, still higher adhesion properties than the reactive ETFE disclosed in Patent Document 1, are now desired between the ETFE coating film and the substrate. Likewise, still higher adhesion properties than the primer disclosed in Patent Document 2, are now desired between the ETFE coating film and the substrate. Further, Patent Document 3 does not disclose use as a liquid primer.

Patent Document 3 discloses use of an amine-type curing agent in order to cure an epoxy resin, but if both are mixed, as they are, with a liquid primer composition, a curing reaction proceeds, and in a few days, the composition will be gelled and become no longer useful, and thus, it is not industrially useful as a liquid primer composition.

It is an object of the present invention to solve such problems of the prior art as described above and to provide a liquid primer composition excellent in adhesion properties to a substrate and a laminate obtainable by using it.

### SOLUTION TO PROBLEM

The present invention has the following constructions.

The present invention provides a liquid primer composition comprising a powder (X) made of a reactive ethylene/tetrafluoroethylene copolymer containing repeating units (A) based on tetrafluoroethylene, repeating units (B) based on ethylene, and repeating units (C) based on a monomer having an acid anhydride residue and a polymerizable unsaturated bond, in a content ratio of (C)/((A) + (B)) being from 1/10,000 to 5/100 by molar ratio; a powder (Y) made of an epoxy resin; and water (Z); wherein the content of the powder (Y) made of an epoxy resin is from 1 to 30 parts by mass per 100 parts by mass of the powder (X) made of a reactive ethylene/tetrafluoroethylene copolymer; wherein the monomer having an acid anhydride residue and a polymerizable bond is selected from one or more of maleic anhydride, itaconic anhydride, citraconic anhydride, or 5-norbornene-2,3-dicarboxylic anhydride.

Further, the present invention provides a laminate having a primer layer being a heat-treated product of the above composition and a top coating layer made of a fluororesin, laminated in this order on the surface of a substrate.

### ADVANTAGEOUS EFFECTS OF INVENTION

By the present invention, it is possible to provide a liquid primer composition excellent in adhesion properties to a substrate and a laminate obtainable by using it.

### DESCRIPTION OF EMBODIEMTNS

In this specification, the term "step" is meant to include not only an independent step but also a step which cannot be definitely distinguished from another step, so long as the desired object of that step is thereby accomplished. Further, a numerical range represented by using " to " represents a range including the numerical values given before and after" to " as the minimum value and the maximum value, respectively.

Further, the content of each component in a composition means, when a plurality of materials corresponding to each component are present in the composition, the total amount of the plurality of materials present in the composition, unless otherwise specified.

A primer layer to be formed by using the liquid primer composition of the present invention (hereinafter also referred to simply as "the primer composition") is excellent in adhesion properties to a substrate, and especially is excellent in adhesion properties to a substrate and in adhesion properties to a top coating layer made of a fluororesin to be formed on the primer layer. Further, the primer composition is excellent in storage stability. Furthermore, it is excellent in coating properties, and it is thereby possible to readily obtain a coating layer with high uniformity.

### <Powder (X) made of reactive ethylene/tetrafluoroethylene copolymer>

The powder (X) made of a reactive ethylene/tetrafluoroethylene copolymer (hereinafter referred to also as "reactive ETFE powder (X)") contains repeating units (A) based on tetrafluoroethylene (hereinafter referred to also as "TFE") (hereinafter referred to also as "repeating units (A)"), repeating units (B) based on ethylene (hereinafter referred to also as "repeating units (B)"), and repeating units (C) based on a monomer having an acid anhydride residue and a polymerizable unsaturated bond selected from one or more of maleic anhydride, itaconic anhydride, citraconic anhydride, or 5-norbornene-2,3-dicarboxylic anhydride (hereinafter referred to also as "repeating units (C)").

In the present invention, the reactive ETFE powder (X) will react with an epoxy resin in a firing step at a temperature of from 200 to 320°C, but its reaction at room temperature is extremely suppressed, whereby it can be stably stored for a long period of time.

As the reactive ETFE powder (X), one type may be used alone, or two or more types may be used in combination.

### <Repeating units (C) based on a monomer having an acid anhydride residue and a polymerizable unsaturated bond>

The reactive ETFE powder contains at least one type of repeating units (C) selected from maleic anhydride, itaconic anhydride (hereinafter referred to as "IAH"), citraconic anhydride (hereinafter referred to as "CAH"), or 5-norbornene-2,3-dicarboxylic anhydride. Preferred is IAH or CAH. When IAH or CAH is used, reactive ETFE tends to be easily obtainable.

As the monomer having an acid anhydride residue and a polymerizable unsaturated bond, one type may be used alone, or two or more types may be used in combination.

In the present invention, the content ratio of (C)/((A) + (B)) is from 1/10,000 to 5/100 by molar ratio. If (C)/((A) + (B)) is less than 1/10,000, the chemical reaction with the powder (Y) made of an epoxy resin tends to be too little in the firing step to produce a primer layer, whereby it tends to be difficult to obtain a high adhesion force to a substrate. On the other hand, if (C)/((A) + (B)) exceeds 5/100, the chemical resistance or the heat resistance tends to be low. (C)/((A) + (B)) is preferably from 1/1,000 to 5/100, more preferably from 3/2,000 to 3/100, particularly preferably from 3/1,000 to 3/100. Within such a range, the adhesion properties tend to be further excellent, and the chemical resistance or the heat resistance tends to be further excellent.

In the present invention, the content ratio of (A) to (B) is not particularly limited, but (A)/(B) is preferably from 20/80 to 80/20, more preferably from 50/50 to 70/30, by molar ratio. When (A)/(B) is at least 20/80, the heat resistance, weather resistance, chemical resistance, etc. tend to be further improved, and when (A)/(B) is at most 80/20, the mechanical strength, melting properties, etc. tend to be further improved.

In the present invention, the contents of repeating units (A), (B) and (C) correspond substantially to the charged amounts of monomers to constitute the respective repeating units.

### <Repeating units (D) based on other monomers>

The reactive ETFE in the present invention may contain, in addition to repeating units (A), (B) and (C), repeating units (D) based on other monomers other than monomers to constitute repeating units (A), (B) and (C) (hereinafter referred to also as "repeating units (D)"). Repeating units (D) may be one type alone, or a combination of two or more types.

Other monomers to constitute the repeating units (D) may, for example, be a hydrocarbon-type olefin having at least three carbon atoms, such as propylene or butene; a compound represented by CH₂=CX(CF₂)ₙY (wherein X and Y are each independently a hydrogen atom or a fluorine atom, and n is an integer of from 2 to 8); a fluoro-olefin having hydrogen atoms in an unsaturated group, such as vinylidene fluoride, vinyl fluoride or trifluoroethylene; a fluoro-olefin (excluding TFE) having no hydrogen atom in an unsaturated group, such as hexafluoropropylene or chlorotrifluoroethylene; a perfluoro(alkyl vinyl ether) such as perfluoro(propyl vinyl ether); a vinyl ether, such as an alkyl vinyl ether, a (fluoroalkyl) vinyl ether, glycidyl vinyl ether, hydroxybutyl vinyl ether or methyl vinyloxybutyl carbonate; an vinyl ester such as vinyl acetate, vinyl chloroacetate, vinyl butanoate, vinyl pivalate, vinyl benzoate or vinyl crotonate; a (meth)acrylate such as a (polyfluoroalkyl) acrylate or a (polyfluoroalkyl) methacrylate.

As such other monomers, one type may be used alone, or two or more types may be used in combination.

As such other monomers, at least one member selected from the group consisting of hexafluoropropylene, perfluoro(propyl vinyl ether) and a compound represented by the above CH₂=CX(CF₂)ₙY, is preferred. Further, a compound represented by the above CH₂=CX(CF₂)ₙY is more preferred, and one wherein n = 2 to 4, is particularly preferred.

Specific examples of the compound represented by CH₂=CX(CF₂)ₙY wherein n = 2 to 4, include CH₂ =CF(CF₂)₂F, CH₂=CF(CF₂)₃ F, CH₂=CF(CF₂)₄F, CH₂=CF(CF₂)₂H, CH₂=CF(CF₂)₃H, CH₂=CF(CF₂)₄H, CH₂=CH(CF₂)₂F, CH₂=CH(CF₂)₃F, CH₂=CH(CF₂)₄F, CH₂=CH(CF₂)₂H, CH₂=CH(CF₂)₃H, CH₂=CH(CF₂)₄H, etc. CH₂=CF(CF₂)₂F, CH₂=CH(CF₂)₂F, CH₂=CH(CF₂)₂H or CH₂=CF(CF₂)₂H is preferred, and CH₂=CH(CF₂)₂F is more preferred.

The content of repeating units (D) based on other monomers is preferably from 0 to 20 mol%, more preferably from 0 to 15 mol%, particularly preferably from 0 to 10 mol%, to all repeating units in the reactive ethylene/tetrafluoroethylene copolymer. In the present invention, the content of (D) corresponds substantially to the charged amount of other monomers.

### <Average particle size>

The average particle size of the reactive ETFE powder (X) is not particularly limited, but is preferably from 0.1 to 100 µm, more preferably from 0.5 to 50 µm, particularly preferably from 1 to 30 µm. When the average particle size is at least 0.1 µm, the production is not difficult, and when it is at most 100 µm, particles of the reactive ETFE powder (X) in the liquid primer composition will not sediment in a short time, and the storage stability tends to be improved. The average particle size of the reactive ETFE powder (X) is a median size on volumetric basis as measured by means of a laser diffraction scattering particle size distribution apparatus.

### <Preparation method>

The method for producing the reactive ETFE powder (X) is not particularly limited, but a method may be mentioned wherein ETFE is subjected to pulverization treatment after its production. The method for producing reactive ETFE is not particularly limited, but a method disclosed in JP-A-2004-238405 may, for example, be mentioned. Here, in a case where a dispersion of reactive ETFE is produced, the ETFE dispersion may be used, as it is, as the reactive ETFE powder (X). The pulverization treatment may, for example, be a method wherein an ETFE dispersion is granulated to an intermediate particle size, followed by drying, and then, pulverized by a pulverizer such as a hammer mill, a turbo mill, a cutting mill, a crusher, a jet mill or a counter jet mill, or a method of mechanically pulverizing ETFE at a low temperature of less than room temperature where reactive ETFE is embrittled (hereinafter referred to also as "freeze-crushing").

In the case of freeze-crushing, pulverization is carried out while cooling with a cooling medium such as liquefied carbon dioxide gas or liquid nitrogen. As the freeze-crushing apparatus, a freeze-crushing machine manufactured by AS ONE Corporation, or Linrex Mill manufactured by Hosokawa Micron Corporation may, for example, be used.

The temperature at the time of pulverization is preferably from -200 to 20°C, more preferably from -180 to -20°C, particularly preferably from -150 to -50°C.

Here, the particle size of the reactive ETFE powder (X) may be adjusted by classifying by means of sieves or an air stream

### <Powder (Y) made of epoxy resin>

The powder (Y) made of an epoxy resin is solid at normal temperature (e.g. 25°C).

The epoxy resin is meant for a resin having at least one epoxy group in one molecule. The epoxy resin is not particularly limited, and may, for example, be a bisphenol A-type epoxy resin obtainable by a condensation reaction of bisphenol A with epichlorohydrin, a bisphenol F-type epoxy resin, a bisphenol AD-type epoxy resin, a phenol novolac-type epoxy resin, a cresol novolac-type epoxy resin, a glycidyl ester-type epoxy resin, a biphenyl-type epoxy resin, a polymer-type epoxy resin, other modified epoxy resins, etc.

As the powder (Y) made of an epoxy resin, one type may be used alone, or two or more types may be used in combination.

The weight average molecular weight of the epoxy resin is not particularly limited, but is preferably from 400 to 3,500, more preferably from 400 to 3,000, particularly preferably from 400 to 2,000. When the molecular weight of the epoxy resin is at least 400, a cross-linking reaction tends to be less likely to take place during the storage, and the storage stability tends to be improved, and when it is at most 3,500, the adhesion force tends to be improved.

The epoxy equivalent of the powder (Y) made of an epoxy resin is preferably from 200 to 2,700, more preferably from 250 to 2,300, particularly preferably from 250 to 2,000. When the epoxy equivalent is at least 200, the cross-linking reaction tends to be less likely to take place during the storage, and the storage stability tends to be improved, and when it is at most 2,700, the adhesion force tends to be improved. The epoxy equivalent is one obtained by dividing the molecular weight of an epoxy resin by the number of epoxy groups in the molecule.

As such an epoxy resin, as a solid epoxy resin as a commercial product, epoxy resin jER (registered trademark) 1004, 1004K, 1004F, 1004AF or 1007 manufactured by Mitsubishi Chemical Corporation, or epoxy resin Epiclon (registered trademark) 4050 or 7050 manufactured by DIC Corporation, may, for example, be mentioned.

Further, the powder (Y) made of an epoxy resin to be used in the present invention may be a dispersion having the powder (Y) made of an epoxy resin, dispersed in a liquid medium such as water. As specific examples of the dispersion of the powder (Y) made of an epoxy resin, as commercial products, epoxy resin jER (registered trademark) W1155R55, W3435R67, manufactured by Mitsubishi Chemical Corporation, and Adeka resin (registered trademark) EM-0517, 052, manufactured by Adeka Corporation, etc. may be mentioned.

### <Average particle size>

The average particle size of the powder (Y) made of an epoxy resin is not particularly limited, but is preferably from 0.1 to 50 µm, more preferably from 0.2 to 40 µm, particularly preferably from 0.3 to 30 µm. When the average particle size of the powder (Y) made of an epoxy resin is at least 0.1 µm, the reaction tends to be less likely to take place during the storage, and the storage stability tends to be improved, and when it is at most 50 µm, the adhesion force tends to be improved, the powder tends to be less likely to sediment in the primer composition, and the storage stability tends to be improved. The average particle size of the powder (Y) made of an epoxy resin is a median size on volumetric basis as measured by means of a laser diffraction scattering particle size distribution apparatus.

### <Preparation method>

The method for producing the powder (Y) made of an epoxy resin is not particularly limited, and it may be produced by a method of pulverizing the above-mentioned commercially available solid epoxy resin by means of a pulverizer such as a hammer mill, a turbo mill, a cutting mill, a crusher, a jet mill or a counter jet mill, or a method of freeze-crushing it at a low temperature, or otherwise, together with water containing a surfactant, the solid epoxy resin may be pulverized by e.g. a ball mill, a beads mill or a sand mill to obtain a dispersion.

In the composition of the present invention, the content of the powder (Y) made of an epoxy resin is from 1 to 30 parts by mass, preferably from 2 to 25 parts by mass, particularly preferably from 3 to 20 parts by mass, per 100 parts by mass of the reactive ETFE powder (X). If the content of the powder (Y) made of an epoxy resin to the reactive ETFE powder (X) is less than 1 part by mass, the adhesion force tends to be low, and if it exceeds 30 parts by mass, foaming or color change of the primer layer tends to be likely to occur due to heat decomposition of the epoxy resin. Here, the content of the powder (Y) made of an epoxy resin is a content calculated as solid content. In the present invention, the content calculated as solid content of a component is meant for a mass of the residue excluding volatile components such as water.

### <Water (Z)>

The liquid primer composition contains water (Z). The content of water is not particularly limited, and may be selected so that the composition would have an optimum viscosity depending upon the coating method. For example, it is preferably from 20 to 400 parts by mass, more preferably from 30 to 200 parts by mass, particularly preferably from 40 to 150 parts by mass, per 100 parts by mass of the reactive ETFE powder (X). When the content of water to the reactive ETFE powder (X) is at least 20 parts by mass, the viscosity is less likely to become too high, the coating operation tends to be good, and the film thickness tends to be uniform, and when it is at most 400 parts by mass, the viscosity is less likely to become too low, and sagging or coating irregularities tend to be prevented during coating and drying.

Otherwise, it is possible that in order to suppress sedimentation of the powder, a primer composition having a high viscosity is prepared wherein the content of water is at least 1 part by mass and less than 20 parts by mass, per 100 parts by mass of the reactive ETFE powder (X), and the content of the reactive ETFE powder (X) and the powder (Y) made of an epoxy resin, is high, and such a primer composition is used as diluted with water to have an optimum viscosity depending upon the coating method. The primer composition may contain other components within a range to provide the effects of the present invention. As such components, a surfactant, a thickener, an organic solvent, etc. may be mentioned.

### <Surfactant>

The primer composition may contain a surfactant. The surfactant is not particularly limited, and may, for example, be a non-ionic surfactant, an anionic surfactant, a cationic surfactant, and a non-ionic surfactant is preferred. The surfactant may be one with a low molecular weight or high molecular weight.

The HLB (Hydrophile-Lipophile Balance) value of the surfactant.is not particularly limited so long as the primer composition is one having a desired surface tension, but it is preferably from 3 to 15, more preferably from 6 to 10, further preferably from 7 to 9.

As the surfactant, one type may be used alone, or two or more types may be used in combination.

The non-ionic surfactant may, for example, be one represented by the following formula (1), (2) or (3), or other non-ionic surfactants. One represented by the formula (1), (2) or (3) is preferred, and an acetylene alcohol-type surfactant represented by the formula (1) is more preferred.

When the primer composition contains the surfactant represented by the formula (1), the surface tension of the composition tends to be low, water tends to readily penetrate among particles of the reactive ETFE powder (X), the dispersibility tends to be good, foaming tends to be less likely to occur, and the storage stability tends to be improved.

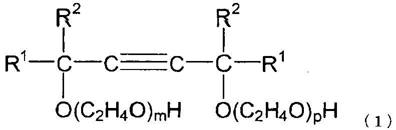

In the formula, R¹ and R² are each independently a C₁₋₅ alkyl group, and m and p are each independently an integer of from 0 to 25, provided that m + p = 1 to 40.

R³-O-A-Z (2)

In the formula, R³ is a C₆₋₁₈ alkyl group, A is a polyoxyalkylene chain composed of from 0 to 3 oxybutylene groups, from 0 to 3 oxypropylene groups and from 5 to 20 oxyethylene groups, and Z is a hydrogen atom or a methyl group.

R⁴-C₆H₄-O-B-H (3)

In the formula, R⁴ is a C₄₋₁₂ alkyl group, and B is a polyoxyethylene chain composed of from 5 to 20 oxyethylene groups.

As specific examples of the non-ionic surfactant represented by the formula (1), Surfinol (trademark) 420, 104, SE-F, and Dynol (trademark) 604, manufactured by Air Products Japan, Inc. may be mentioned, and Dynol 604 (HLB value = 8) is particularly preferred.

As specific examples of the non-ionic surfactant represented by the formula (2), for example, non-ionic surfactants having molecular structures of C₁₃H₂₇-(OC₂H₄)₁₀-OH, C₁₂H₂₅-(OC₂H₄)₁₀-OH, C₁₀H₂₁CH(CH₃)CH₂-(OC₂H₄)₉-OH, C₁₃H₂₇-(OC₂H₄)₉-OCH(CH₃)CH₂-OH, C₁₆H₃₃-(OC₂H₄)₁₀-OH, HC(C₅H₁₁)(C₇H₁₅)-(OC₂H₄)₉-OH, etc., may be mentioned, and as commercial products, Tergitol (registered trademark) 15S series, manufactured by The Dow Chemical Company, and Lionol (registered trademark) TD series, manufactured by Lion Corporation, may, for example, be mentioned.

As specific examples of the non-ionic surfactant represented by the formula (3), for example, non-ionic surfactants having molecular structures of C₈H₁₇-C₆H₄-(OC₂H₄)₁₀-OH, C₉H₁₉-C₆H₄-(OC₂H₄)₁₀-OH, etc., may be mentioned, and as commercial products, Triton (registered trademark) X series, manufactured by The Dow Chemical Company, and Nikkol (registered trademark) OP series or NP series, manufactured by Nikko Chemicals Co., Ltd. may, for example, be mentioned.

Other non-ionic surfactants are not particularly limited, and may, for example, be a sorbitan fatty acid ester such as polyoxyethylene sorbitan monolaurate, and a glycerine fatty acid ester such as glycerol monostearate. As a commercial product of other non-ionic surfactant, Leodol (registered trademark) TW-L106, manufactured by Kao Corporation, may be mentioned.

As such other non-ionic surfactants, one type may be used alone, or two or more types may be used in combination.

The anionic surfactant is not particularly limited, and is one having a hydrophilic group such as a carboxylic acid group, a sulfonic acid group or a phosphoric acid group, and for example, sodium stearate, ammonium laurate, sodium lauryl sulfate, ammonium lauryl sulfate, triethanolamine lauryl sulfate, or sodium dodecylbenzene sulfonate may be mentioned.

The cationic surfactant is not particularly limited, and is one having a quaternary ammonium group as a hydrophilic group, such as distearyl dimethylammonium chloride or tetramethylammonium chloride.

As the anionic surfactant or the cationic surfactant, one type may be used alone, or two or more types may be used in combination.

The content of the surfactant is not particularly limited, and is preferably from 0.01 to 10 parts by mass, more preferably from 0.1 to 7.0 parts by mass, particularly preferably from 0.5 to 5.0 parts by mass, per 100 parts by mass of the reactive ETFE powder (X). When the content of the surfactant is at least 0.01 part by mass, the viscosity of the composition tends to be stabilized, and repellency tends to be suppressed without lowering the wettability, and when it is at most 10 parts by mass, an odor due to pyrolysis gas in the after-described firing step will not be high, and formation of air bubbles in the coating film due to pyrolysis gas tends to be suppressed.

### <Thickener>

The primer composition may contain a thickener. When the primer composition contains a thickener, it is possible to easily adjust the viscosity depending upon the coating method. As such a thickener, an urethane-type thickener and a polyethylene oxide-type thickener may be mentioned.

As specific examples of the urethane-type thickener, Adecanol (registered trademark) UH-756VF, UH-752 and UH-472, manufactured by Adeca Corporation, Disparlon (registered trademark) AQ-580, AQ-600 and AQ-607, manufactured by Kusumoto Chemicals, Ltd., and BYK-420, manufactured by BYK, etc. may be mentioned.

As specific examples of the polyethylene oxide-type thickener, PEO (registered trademark)-1, PEO-2 and PEO-3, manufactured by Sumitomo Seika Chemicals Co., Ltd., Polyox (registered trademark) N-80 and N-750, manufactured by Union Carbide Corporation, etc. may be mentioned.

One of them may be used alone, or two or more of them may be used in combination.

The content of the thickener is preferably from 0.1 to 5.0 parts by mass, more preferably from 0.1 to 4.0 parts by mass, particularly preferably from 0.2 to 3.0 parts by mass, per 100 parts by mass of the reactive ETFE powder (X). When the content of the thickener is at least 0.1 part by mass, the viscosity of the primer composition is less likely to become too low, whereby the powder such as the reactive ETFE powder or the powder (Y) made of an epoxy resin, tends to be less likely to sediment, and the storage stability tends to be improved. And, when the content of the thickener is at most 5.0 parts by mass, the viscosity of the primer composition is less likely to become too high, whereby coating irregularities or thickness irregularities due to leveling failure, tend to be less likely to occur. Here, in the case of using a water-soluble thickener, the content of the thickener is meant for the content as calculated as solid content in the thickener.

### <Organic solvent>

The primer composition may contain, in a small amount, an organic solvent e.g. an alcohol such as ethanol, isopropyl alcohol or butanol, an ether such as ethyl cellosolve or ethyl carbitol, or an aromatic solvent such as toluene or xylene. When the primer composition contains an organic solvent, the drying speed of the primer composition may be adjusted. The content of the organic solvent is not particularly limited, and may be from 0 to 20 parts by mass, preferably from 0 to 10 parts by mass, per 100 parts by mass of water (Z).

### <Further components>

The primer composition may contain, as a coloring agent, a pigment such as carbon black, graphite, cobalt blue, ultramarine or titanium oxide; as a reinforcing material, glass fibers, carbon fibers, carbon nanotubes, conductive carbon black or other synthetic resin powders; an antisceptic.

Further, the primer composition may contain a thermal stabilizer such as a copper compound, a tin compound, an iron compound, a lead compound, a titanium compound or an aluminum compound, within a range not to impair the adhesion effects of the primer composition.

The primer composition may contain an amine-type curing agent. The amine-type curing agent may, for example, be an aliphatic polyamine, a modified aliphatic polyamine, an aromatic polyamine or a dicyandiamide. The content of the amine-type curing agent is not particularly limited, but is less than 1 part by mass, preferably less than 0.1 part by mass, per 100 parts by mass of the powder (Y) made of an epoxy resin, more preferably not substantially contained. Usually, the epoxy resin has adhesion effects by a reaction with a curing agent such as an amine-type curing agent, but, if an amine-type curing agent is incorporated to the composition of the present invention, the reaction tends to proceed as time passes, and gelation is likely to occur, whereby coating tends to be difficult.

### <Surface tension>

The surface tension of the primer composition is not particularly limited, but is preferably at most 35 mN/m, more preferably from 15 to 35 mN/m, further preferably from 20 to 34 mN/m, particularly preferably from 25 to 33 mN/m. When the surface tension is at most 35 mN/m, repellency or thickness irregularities due to leveling failure, tend to be suppressed, and when it is at least 15 mN/m, foaming tends to be less likely to occur. The surface tension may be controlled to be within a desired range, by adjusting the type and amount of the surfactant.

### <Viscosity>

The viscosity of the primer composition is not particularly limited, but the measured value at 60 rpm by a rotatory viscometer is preferably from 10 to 10,000 mPa·s, more preferably from 50 to 2,000 mPa·s, particularly preferably from 100 to 800 mPa·s. When the viscosity of the composition is at least 10 mPa·s, sagging is suppressed during coating and drying, and when it is at most 10,000 mPa·s, coating operation will be facilitated, and the coating film tends to become readily uniform. The viscosity is a value measured at 25°C. As the rotatory viscometer, a Brookfield type rotatory viscometer may be mentioned.

### <TI value>

The primer composition preferably has a thixotropic index value (hereinafter referred to as "TI value") of from 2 to 10. The TI value is a numerical value calculated by dividing a measured value as measured at 6 rpm at 25°C by a measured value as measured at 60 rpm at 25°C, by means of a rotatory viscometer. The TI value can be adjusted by adjusting the amount of a component such as water, a surfactant or a thickener. The TI value is more preferably from 3 to 8, particularly preferably from 3 to 7. When the TI value is at least 2, sagging is less likely to occur during coating and drying, and the reactive ETFE liquid or the like is less likely to sediment, whereby the storage stability will be improved, and when it is at most 10, even if coating happens to be irregular, smoothing by leveling tends to be facilitated, and foaming tends to disappear, whereby thickness irregularities tend to be less likely to occur. Further, when the TI value is from 2 to 10, not only good coating can be done, but also components in the composition tend to be less likely to sediment, whereby the storage stability tends to be improved.

### <Preparation method>

In the present invention, the primer composition can be produced by mixing the respective components. The sequential order for mixing the respective components is optional, and, for example, in the order of water, the reactive ETFE powder (X) and the powder (Y) made of an epoxy resin, the components may be put into a mixing container and mixed by a stirrer with stirring blades for from 1 to 120 minutes, preferably from 1 to 60 minutes. Further, in a case where the composition of the present invention further contains a surfactant, a thickener and other components, for example, the components may be put into a mixing container and mixed in the order of water, the surfactant, the thickener, the reactive ETFE powder (X), the powder (Y) made of an epoxy resin, and other components.

### <Laminate>

In the present invention, the laminate is one having a primer layer being a heat-treated product of the primer composition and a top coating layer made of a fluoro-resin, laminated in this order on the surface of a substrate. The laminate may further be such that on the surface of the top coating layer, a coating layer of an organic or inorganic material being a material different from the top coating layer, may be laminated.

The laminate is excellent in heat resistance, durability such as alkali resistance and adhesion properties.

### <Substrate>

The substrate in the present invention is not particularly limited and may, for example, be a metal such as iron, stainless steel, aluminum, copper, tin, titanium, chromium, nickel or zinc, glass, or heat-resistant material such as ceramic. Among them, iron, stainless steel or aluminum is preferred.

The shape of the substrate in the present invention is not particularly limited and may, for example, be a pipe, a tube, a film, a plate, a tank, a roll, a vessel, a bulb or an elbow, and it may be used for, for example, various containers, pipes, tubes, tanks, pipe lines, joints, rolls, autoclaves, heat exchangers, distillation towers, jigs, bulbs, stirring vanes, tanker lorries, pumps, casings for blowers, centrifugal separators, kitchen utensils, etc.

### <Primer layer>

The primer layer is a heat-treated product of the primer composition. The primer composition is as described above including its preferred embodiments. The thickness of the primer layer is preferably from 1 to 1,000 µm, more preferably from 5 to 500 µm, most preferably from 10 to 200 µm. When the thickness of the primer layer is at least 1 µm, the adhesion properties will be sufficiently exhibited, and when it is at most 1,000 µm, foaming or swelling tends to be less likely to occur.

### <Top coating layer>

The top coating layer made of a fluoro-resin is a layer obtainable by applying a fluoro-resin powder or a powdery top coating composition containing a fluoro-resin, followed by curing.

### <Powder made of fluoro-resin or powdery top coating composition containing powder made of fluoro-resin>

The powder made of a fluoro-resin is solid at normal temperature (e.g. 25°C).

The fluoro-resin is not particularly limited, and may, for example, be a homopolymer or copolymer of a fluorinated monomer, provided that the above-described reactive ETFE is excluded. The fluorinated monomer may, for example, be the above-mentioned, TFE, fluoro-olefin having hydrogen atoms in an unsaturated bond, fluoro-olefin having no hydrogen atom in an unsaturated bond (excluding TFE), perfluoroalkyl vinyl ether, or the like. Further, the fluoro-resin may be a copolymer wherein the above-mentioned, ethylene, hydrocarbon-type olefin having at least 3 carbon atoms, monomer having an acid anhydride residue and a polymerizable unsaturated bond, vinyl ether, vinyl ester, or a monomer having no fluorine atom, such as a (meth)acrylate, is used as a co-monomer component.

As such a fluoro-resin, a non-reactive ethylene/tetrafluoroethylene copolymer (hereinafter referred to also as "non-reactive ETFE"), a propylene/TFE copolymer, a TFE/perfluoro(alkyl vinyl ether) copolymer, a TFE/hexafluoropropylene copolymer, a TFE/hexafluoropropylene/ethylene copolymer, or a vinylidene fluoride copolymer may be mentioned, and a non-reactive ETFE is preferred. That is, in the present invention, the top coating layer made of a fluoro-resin is preferably one obtainable by using a powder made of a non-reactive ETFE (hereinafter referred to also as "non-reactive ETFE powder") or a powdery top coating composition containing a powder made of a non-reactive ETFE.

The non-reactive ETFE powder means an ETFE powder wherein (C)/((A)+(B)) in the above definition of the reactive ETFE powder is less than 1/10,000 by molar ratio. Further, the non-reactive ETFE powder may contain repeating units (D) based on other monomers. Except that (C)/((A)+(B)) is less than 1/10,000 by molar ratio, the non-reactive ETFE powder is as described above with respect to the reactive ETFE powder including its preferred embodiments.

As specific examples of the non-reactive ETFE powder, Fluon (registered trademark) TL-081, Z-8820X and LM-2150 (each has no repeating units (C) based on a monomer having an acid anhydride residue and a polymerizable unsaturated bond), manufactured by Asahi Glass Co., Ltd., may be mentioned.

As the powder made of a fluoro-resin, one type may be used alone, or two or more types may be used in combination.

The average particle size of the powder made of a fluoro-resin is preferably from 1 to 1,000 µm, more preferably from 5 to 300 µm, particularly preferably from 10 to 200 µm. When the average particle size of the powder made of a fluoro-resin is at least 1 µm, the deposition amount is less likely to be too small, and the number of coating applications to attain a prescribed thickness may be reduced, and when it is at most 1,000 µm, smoothness of the surface tends to be maintained. The average particle size of the powder made of a fluoro-resin is a median size based on volume as measured by means of a laser diffraction scattering particle size distribution apparatus.

Further, the powdery top coating composition containing the powder made of a fluoro-resin preferably contains a thermal stabilizer such as a copper compound, a tin compound, an iron compound, a lead compound, a titanium compound or an aluminum compound. When it contains a thermal stabilizer, yellowing or sagging due to thermal degradation in the firing step tends to be less likely to occur. The content of the thermal stabilizer is preferably from 1×10⁻⁸ to 5 mass%, more preferably from 1x10⁻⁷ to 1 mass%, particularly preferably from 5×10⁻⁷ to 0.1 mass%, in the top coating composition. Further, the specific surface area of the thermal stabilizer is preferably from 0.1 to 100 m²/g, more preferably from 1 to 70 m²/g, particularly preferably from 5 to 50 m²/g. The specific surface area was measured by a BET method.

### <Thickness of top coating layer>

As the thickness of the top coating layer, an optimum thickness may be selected within a range of from 10 to 5,000 µm. For the purpose of e.g. improving water repellency, improving an antifouling property or improving glossiness, of the surface, a thickness of from 10 to 100 µm is preferred; for the purpose of improving lubricity of the substrate surface or protection of the surface, a thickness of from 50 to 500 µm is preferred; for the purpose of protection of the substrate against an organic reagent or an inorganic reagent, a thickness of from 200 to 1,000 µm is preferred; and particularly in a case where durability for a very long period of time is required, a thickness of from 1,000 to 5,000 µm is preferred. If too thin, the covering effects tend to be insufficient, and if too thick, the number of coating operations is required to be increased, such being not only economically disadvantageous, but also stress-strain is likely to occur due to a difference in the thermal expansion coefficient from the substrate, such being undesirable.

### <Coating layer of organic or inorganic material as a material different from top coating layer>

A coating layer of an organic or inorganic material as a material different from the top coating layer (hereinafter referred to also as a "further coating layer") may, for example, be a coloring layer, a hard coating layer or a penetration-preventing layer. When the laminate further contains such a coating layer, it will have a further effect such as a coloring effect, a hard coating effect or a penetration-preventing effect.

The thickness of the further coating layer is not particularly limited, and may be from 0 to 1,000 µm, preferably from 0 to 500 µm. The thickness of the further coating layer may be adjusted depending upon the characteristics to be imparted by the further coating layer.

### <Peel strength>

In the laminate of the present invention, the adhesion force of the top coating layer to the substrate can be ascertained by measuring the 90° peel strength. The higher the adhesion force, the better. However, it is preferably a peel strength of at least 20 N/cm, more preferably a peel strength of at least 35 N/cm, particularly preferably a peel strength of at least 50 N/cm. If the peel strength is less than 20 N/cm, the adhesion reliability is low, and depending upon the application environment, peeling or blistering of the coating film or corrosion deterioration of the substrate is likely to be brought about, such being undesirable.

### <Process for producing laminate>

The laminate of the present invention is obtained by a production process comprising a step of forming a primer layer on a substrate surface, and a step of forming a top coating layer on the surface of the primer layer, and, as the case requires, containing a step of forming a further coating layer on the surface of the top coating layer.

### <Process for producing primer layer>

The primer layer is obtained by a production process comprising a step of applying the primer composition of the present invention to the surface of a substrate to form a primer composition layer, and a step of heat-treating the primer composition layer to form a primer layer. By the heat treatment, water (Z) contained in the primer composition is removed, and at the same time, the reactive ETFE powder (X) and the powder (Y) made of an epoxy resin are chemically reacted and cured to form a primer layer.

The method for applying the primer composition is not particularly limited, and a known liquid coating method may be applied, such as an air spray coating method, an airless spray coating method, a dip coating method, a brush coating method or an electrostatic coating method. Among them, an air spray coating method is preferred, since it is simple, and a large area can thereby be coated with a uniform thickness.

The thickness of the primer composition layer to be formed on the surface of a substrate is such a thickness that it would become the thickness of the above-mentioned primer layer, including preferred ones. Here, when the thickness of the primer composition is within the above range, sufficient adhesion properties will be developed by applying the primer composition once, however, the primer composition may be applied plural times. Further, the thickness of the primer composition may be adjusted depending upon the thickness of the primer layer after the heat treatment.

The amount of the primer composition to be applied on the surface of a substrate is not particularly limited, so long as it is an amount to obtain the above mentioned thickness of the primer composition layer, and it is preferably from 1.6 to 1,600 g/m², more preferably from 8.0 to 800 g/m², as solid content.

The heat treatment of the primer composition layer can be carried out by an optional heating means, such as an electric furnace, gas furnace or infrared heating furnace, set at a predetermined temperature.

The heat treatment temperature is preferably from 260 to 340°C, more preferably from 280 to 320°C, particularly preferably from 290 to 310°C. When the heat treatment temperature is at least 260°C, lowering of the adhesion force or remaining of air bubbles due to firing deficiency, tends to be less likely to occur, and when it is at most 340°C, change in color or formation of foams tends to be suppressed.

The heat treatment time may vary depending upon the heat treatment temperature, but heat treatment within a range of from 1 to 180 minutes is preferred, and more preferred is from 5 to 120 minutes, and particularly preferred is from 10 to 60 minutes. When the heat treatment time is at least 1 minute, lowering of the adhesion force or remaining of air bubbles due to firing deficiency tends to be less likely to occur, and when it is at most 180 minutes, change in color or formation of foams tends to be suppressed.

Prior to application of the primer composition, the substrate may be preheated at a temperature of at most 200°C. Further, prior to application of the primer composition, the substrate surface may be surface-roughened by e.g. sand blast treatment, etching treatment or metal spray treatment, or cleaning with a solvent may be carried out to remove foreign matters deposited on the surface. Thereby, the adhesion properties tend to be improved. Here, in the case of sand blast treatment, the surface roughness (Ra) can be adjusted within a range of from 1 to 100 µm depending upon the adhesion properties or use. Further, after application of the primer composition of the present invention, prior to the heat treatment, pretreatment may be carried out at a temperature of from room temperature (e.g. 25°C) to about 200°C to remove water (Z) contained in the primer composition layer.

### <Process for producing top coating layer>

The top coating layer is obtained by a production process comprising a step of applying a powder made of a fluoro-resin, or a top coating composition containing a powder made of a fluoro-resin, on the surface of the primer layer laminated on a substrate surface, to form a powder layer made of a fluoro-resin or a top coating composition layer containing the powder made of a fluoro-resin, and a step of heat-treating the powder layer made of a fluoro-resin or the top coating composition layer containing the powder made of a fluoro-resin, to form a top coating layer.

The method for applying the powder made of a fluoro-resin or the top coating composition containing the powder made of a fluoro-resin, is not particularly limited, and a known powder coating method may be applied, such as an electrostatic coating method, a fluidized dipping method or a rotational molding method, but an electrostatic coating method is preferred, since the application can thereby be made simply in a uniform thickness.

The thickness of the powder layer made of a fluoro-resin or the top coating composition layer containing the powder made of a fluoro-resin, to be formed on the surface to the primer layer, is such a thickness that it would become the thickness of the above-mentioned top coating layer, including preferred ones. Here, when the thickness of the powder layer made of a fluoro-resin or the top coating composition layer containing the powder made of a fluoro-resin is within the above range, it is sufficient to apply the powder made of a fluoro-resin or the top coating composition containing the powder made of a fluoro-resin once, however, the powder made of a fluoro-resin or the top coating composition containing the powder made of a fluoro-resin may be applied plural times. Further, the thickness of the powder layer made of a fluoro-resin or the top coating composition layer containing the powder made of a fluoro-resin may be adjusted depending upon the thickness after the firing. In a case where the top coating layer is formed plural times, such a plurality of top coating layers may be collectively referred to as the top coating layer.

The amount of the powder made of a fluoro-resin or the top coating composition containing the powder made of a fluoro-resin, to be applied on the surface of the primer layer, is not particularly limited, so long as it is an amount to become the above-mentioned thickness of the top coating layer.

The heat treatment of the powder layer made of a fluoro-resin or the top coating composition layer containing the powder made of a fluoro-resin, is not particularly limited, so long as it is under such a condition that the top coating layer is formed on the surface of the primer layer, and it may be conducted by an optional means, such as an electric furnace, a gas furnace or an infrared heating furnace, set at a predetermined temperature. The heat treatment temperature is preferably from 260 to 340°C, more preferably from 280 to 320°C, particularly preferably from 290 to 310°C. When the heat treatment temperature is at least 260°C, remaining of voids or air bubbles due to firing deficiency tends to be less likely to occur, and when it is at most 340°C, change in color or foaming tends to be less likely to occur.

The heat treatment time may vary depending upon the heat treatment temperature, but heat treatment within a range of from 1 to 180 minutes is preferred, and more preferred is from 5 to 120 minutes, and particularly preferred is from 10 to 60 minutes. When the heat treatment time is at least 1 minute, remaining of air bubbles due to firing deficiency tends to be less likely to occur, and when it is at most 180 minutes, change in color or sagging tends to be less likely to occur.

### <Process for producing coating layer of organic or inorganic material as a material different from top coating layer>

The further coating layer is obtained by a production process comprising a step of applying a composition for a coating layer of an organic or inorganic material as a material different from the top coating, on the surface of the top coating layer, and a step of forming the further coating layer.

The thickness of the coating layer of an organic or inorganic material as a material different from the top coating, is not particularly limited, and may be the thickness of the above-mentioned further coating layer.

The composition for the further coating layer and the conditions for the process for producing the further coating layer, are not particularly limited, and conditions which are commonly used for forming a further coating layer, may be mentioned.

### EXAMPLES

Now, the present invention will be described in detail with reference to Examples, but the present invention is by no means limited thereto. Ex. 1 to 8 are Examples of the present invention, and Ex. 9 to 11 are Comparative Examples. The coating and evaluations in each Ex. were conducted by the following methods.

### [Coating thickness]

Five points were measured by an electromagnetic film thickness meter, and an average value was obtained.

### [Viscosity]

By means of a rotatory viscometer manufactured by Brookfield, the viscosity was measured at 25°C.

### [Surface tension]

By means of a Du Nouy-type tensiometer, the surface tension was measured at 25°C.

### [Judgement of appearance]

A case where no abnormality is observed on the coating film appearance of a primer layer-attached substrate or a coating test specimen, was rated as rank A, and a case where sagging or thickness irregularities are observed, or abnormality such as air bubbles or swelling, or irregularities in coating film thickness, are confirmed, ranking was made by the following standards, and rank D was taken as unacceptable.

| | |
|---|---|
| Very uniform appearance: | rank A |
| Generally uniform appearance: | rank B |
| Slight abnormality observed: | rank C |
| Substantial abnormality observed: | rank D |

### [Evaluation of initial adhesion properties]

On the surface of a coating test specimen, by using a cutter knife, cuts were made at 10 mm intervals, whereupon a part of the top coating layer was peeled and then fixed on a chuck of a tensile tester, and the 90° peel strength was measured at a tensile speed of 50 mm/min. With respect to the obtained initial peel strength, ranking was made by the following standards, and rank D was taken as unacceptable.

| | |
|---|---|
| Peel strength≧50.0 N/cm: | rank A |
| At least 35.0 and less than 50.0 N/cm: | rank B |
| At least 20.0 and less than 35.0 N/cm: | rank C |
| <20.0 N/cm: | rank D |

### [Hydrothermal resistance]

A coating test specimen was treated at 130°C for 24 hours by a pressure cooker (high temperature vapor pressure vessel), whereupon in the same manner as the evaluation of the initial adhesion properties, the peel strength of the top coating layer was measured. With respect to the obtained peel strength after the hydrothermal resistance test, ranking was made in the same manner as the evaluation of the initial peel strength.

### [Alkali resistance]

A coating test specimen was immersed in a 10 mass% sodium hydroxide aqueous solution at 80°C for 300 hours, whereupon in the same manner as the evaluation of the initial adhesion properties, the peel strength of the top coating layer was measured. With respect to the obtained peel strength after the alkali resistance test, ranking was made in the same manner as the evaluation of the initial peel strength.

### [Average particle size]

Each powder was dispersed in a 0.1 mass% surfactant aqueous solution, and the average particle size was measured by means of a laser scattering particle size distribution meter (LA-920) manufactured by Horiba, Ltd.

### [Storage stability]

A liquid primer composition was put in a sample bottle made of glass and having an inner volume of 100 cc and stored for 300 hours at 25°C, whereupon up-and-down inversion was repeated to redisperse the precipitate formed at the bottom, and based on the number of times where complete redispersion was possible, ranking was made.

| | |
|---|---|
| 50 times or less: | rank A |
| 51 to 100 times: | rank B |
| 101 to 200 times: | rank C |
| 201 times or more: | rank D |

### [Ex. 1]

### <Production of reactive ETFE powder (X) (reactive ETFE-1)>

ETFE comprising repeating units based on TFE/repeating units based on ethylene/repeating units based on IAH/repeating units based on CH₂=CH(CF₂)₄F in a molar ratio of 57.6/40.0/1.8/0.6 and having a melting point of 242°C, was solution-polymerized and subjected to granulation treatment, and the particles thereby obtained, were pulverized by a freeze crusher TPH-01 manufactured by AS ONE Corporation, to obtain reactive ETFE powder (X) having an average particle size of 10 µm (reactive ETFE-1).

### <Production of ETFE liquid primer composition (P-1)>

2 g of a non-ionic surfactant Dinol 604 (acetylene alcohol-type surfactant, HLB=8) manufactured by Air Products and Chemicals, Inc. was added to 90 g of water, then 3 g of an urethane-type thickener Adekanol UH-756VF (polyurethane-type thickener, solid content: 32 mass%) manufactured by Adeka Corporation, was added, and further, 100 g of reactive ETFE-1 was added, followed by stirring. Then, 10 g of an epoxy resin emulsion (W1155R55) (concentration: 55 mass%, average particle size: 0.9 µm, epoxy equivalent: 900, epoxy molecular weight: 850) manufactured by Mitsubishi Chemical Corporation, as an aqueous dispersion (EP-1) of a powder made of an epoxy resin, was added, followed by stirring, to prepare ETFE liquid primer composition (P-1).

The viscosity of this ETFE liquid primer composition (P-1) was, at 25°C, 322 mPa· s at 60 rpm and 1,145 mPa· s at 6 rpm, and the TI value was good at 3.6.

This ETFE liquid primer composition had a suprenatant upon expiration of 300 hours, but was easily redispersed by up-and-down inversion, and the storage stability was good.

### <Production of laminate>

The surface of a SUS 316 stainless steel plate having a length of 50 mm, a breadth of 150 mm and a thickness of 2 mm was subjected to sand blast treatment to bring the surface roughness Ra = 5 to 10 µm by means of alumina particles of 60 mesh, and then, the surface was cleaned with ethanol to prepare a substrate for testing.

On the surface of this substrate for testing, the ETFE liquid primer composition (P-1) was applied by means of an air spray gun for liquid coating material (manufactured by Meiji Air Compressor MFJ. Co., Ltd.), followed by firing at 300°C for 10 minutes as hanged in an oven, to form a primer layer having a thickness of 23 µm thereby to obtain a primer layer-attached substrate.

Then, on its surface, a non-reactive ETFE powder for top coating (non-reactive ETFE-1, Fluon (registered trademark) ETFE-TL-081, manufactured by Asahi Glass Co., Ltd.) was applied by electrostatic coating and fired at 300°C for 10 minutes, and this electrostatic coating and firing step was repeated three times, to form a top coating layer having a total thickness of 360 µm, thereby to obtain a coating test specimen. The initial peel strength of the top coating layer was as high as 77.1 N/cm, and also after the hydrothermal resistance test and the alkali resistance test, it showed a sufficient peel strength.

### [Ex 2]

ETFE liquid primer composition (P-2) was prepared by changing the blend amount of the aqueous dispersion EP-1 of a powder made of an epoxy resin, as shown in Table 1, and a coating test specimen was prepared. The same evaluation as in Ex. 1 was conducted, whereby good results were obtained.

### [Ex. 3]

ETFE liquid primer composition (P-3) was prepared by changing the blend amount of the aqueous dispersion EP-1 of a powder made of an epoxy resin, as shown in Table 1, and blending 0.5 g of a urethane type thickener PEO-2 (polyethylene oxide, molecular weight: 300,000) manufactured by Sumitomo Seika Chemicals Co., Ltd. as a polyethylene oxide type thickener, and a coating test specimen was prepared. The same evaluation as in Ex. 1 was conducted, whereby good results were obtained.

### [Ex. 4]

ETFE liquid primer composition (P-4) was prepared by using, as aqueous dispersion EP-2 of a powder made of an epoxy resin, epoxy resin aqueous emulsion W3435R67 (concentration: 67 mass%, average particle size: 0.5 µm, epoxy equivalent: 275, epoxy molecular weight: 475) manufactured by Mitsubishi Chemical Corporation. Further, by using, as a non-reactive ETFE powder for top coating, Fluon (registered trademark) ETFE-Z-8820X (non-reactive ETFE-2) manufactured by Asahi Glass Co., Ltd., a coating test specimen was prepared. The same evaluation as in Ex. 1 was conducted, whereby good results were obtained.

### [Ex. 5]

Reactive ETFE powder (X) having an average particle size of 5 µm (reactive ETFE-2) was obtained by changing the pulverization conditions for ETFE powder (X) prepared in Ex. 1. Using this, ETFE liquid primer composition (P-5) was prepared with a blend composition as shown in Table 1. After conducting primer coating, top coating was conducted 5 times, to obtain a coating test specimen. The same evaluation as in Ex. 1 was conducted, whereby good results were obtained.

Further, in Ex. 1 to 5, the surfactant used, had a surface tension within a preferred range, whereby the wettability was good, and formation of coating irregularities or repellency at the primer coating surface was prevented, and the storage stability was also good. Further, in Ex. 1 to 5, the epoxy equivalent of the powder made of an epoxy resin used, was within a preferred range, whereby the peel strength after the hydrothermal resistance test and the alkali resistance test was good, and the storage stability was also good. In addition, in Ex. 1 to 5, the particle size of the powder made of an epoxy resin was within a preferred range, whereby the storage stability was good, the viscosity did not become too high, and formation of coating irregularities was prevented.

### [Ex. 6]

Reactive ETFE powder (X) having an average particle size of 40 µm (reactive ETFE-3) was obtained by changing the pulverization conditions for ETFE powder (X) prepared in Ex. 1. Using this, ETFE liquid primer composition (P-6) was prepared with a blend composition shown as Ex. 6 in Table 2, and a coating test specimen was prepared. The same evaluation as in Ex. 1 was conducted, whereby the peel strength at the initial stage and after the hydrothermal resistance test and the alkali resistance test, was good.

### [Ex. 7]

ETFE liquid primer composition (P-7) was prepared with a blend composition shown as Ex. 7 in Table 2, and a coating test specimen was prepared. The same evaluation as in Ex. 1 was conducted, whereby the initial peel strength was good.

### [Ex. 8]

ETFE liquid primer composition (P-8) was prepared with a blend composition shown as Ex. 8 in Table 2, and a coating test specimen was prepared. The same evaluation as in Ex. 1 was conducted, whereby the initial peel strength was good.

### [Ex. 9 (Comparative Example)]

ETFE liquid primer composition (P-9) was prepared with a blend composition shown as Ex. 9 in Table 2, and a coating test specimen was prepared. The same evaluation as in Ex. 1 was conducted, whereby the peel strength, particularly the peel strength after the hydrothermal resistance test and the alkali resistance test, was low, which is considered to be attributable to that no epoxy resin was used.

### [Ex. 10 (Comparative Example)]

ETFE liquid primer composition (P-10) was prepared with a blend composition shown as Ex. 10 in Table 2, and a coating test specimen was prepared. The same evaluation as in Ex. 1 was conducted, whereby the peel strength, particularly the peel strength after the hydrothermal resistance test and the alkali resistance test, was low, which is considered to be attributable to that no reactive ETFE was used.

The results are shown in Tables 1 and 2.

Here, in Tables 1 and 2, "%" for "concentration" is mass%, and a numerical value in brackets represents an amount calculated as solid content, and its unit is parts by mass.

**Table 1**

| | | Unit | Ex. 1 | Ex. 2 | Ex. 3 | Ex. 4 | Ex. 5 |
|---|---|---|---|---|---|---|---|
| Primer composition No. | No. | | P-1 | P-2 | P-3 | P-4 | P-5 |
| Blend ratios in primer composition | Reactive ETFE-1 | Parts by mass | 100 | 100 | 100 | 100 | |
| | Reactive ETFE-2 | Parts by mass | | | | | 100 |
| | EP-1 (concentration: 55%) | Parts by mass | 10 (5.5) | 20 (11) | 30 (16.5) | | 20 (11) |
| | EP-2 (concentration: 67%) | Parts by mass | | | | 10 (6.7) | |
| | EP-3 (concentration: 70%) | Parts by mass | | | | | |
| | EP-4 | Parts by mass | | | | | |
| | Surfactant-1 | Parts by mass | 2 | 2 | 2 | 2 | 2 |
| | Surfactant-2 | Parts by mass | | | | | |
| | Thickener-1 (concentration: 32%) | Parts by mass | 3 (0.96) | 3 (0.96) | | 3 (0.96) | 3 (0.96) |
| | Thickener-2 | Parts by mass | | | 0.5 | | |
| | Water | Parts by mass | 90 | 90 | 90 | 90 | 130 |
| | Total | Parts by mass | 205 | 215 | 222.5 | 205 | 255 |
| Properties of primer | Solid content | % | 52.9 | 53.0 | 53.5 | 53.5 | 44.7 |
| | Viscosity (60 rpm) | mPa·s | 322 | 367 | 412 | 307 | 421 |
| | Viscosity (6 rpm) | mPa·s | 1,145 | 1,354 | 1,437 | 1,321 | 2,730 |
| | TI value | | 3.6 | 3.7 | 3.5 | 4.3 | 6.5 |
| | Surface tension | mN/m | 29.8 | 29.2 | 28.9 | 29.3 | 29.5 |
| | Rank of storage stability | | A | A | A | A | A |
| Primer coating | Application times | Times | 1 | 1 | 1 | 1 | 1 |
| | Coating thickness | µm | 23 | 25 | 22 | 25 | 21 |
| | Rank of appearance | | A | A | A | A | A |
| Top coating | Type of ETFE | | Non-reactive ETFE-1 | Non-reactive ETFE-1 | Non-reactive ETFE-1 | Non-reactive ETFE-2 | Non-reactive ETFE-1 |
| | Application times | Times | 3 | 3 | 3 | 3 | 5 |
| | Coating thickness | µm | 360 | 400 | 390 | 410 | 620 |
| | Rank of appearance | | A | A | A | A | A |
| Peel strength | Initial | N/cm | 77.1 | 80.5 | 77.3 | 72.2 | 70.2 |
| | Rank | | A | A | A | A | A |
| | Hydrothermal resistance | N/cm | 59.6 | 60.3 | 56.8 | 58.6 | 58.1 |
| | Rank | | A | A | A | A | A |
| | Alkali resistance | N/cm | 50.2 | 54.7 | 48.9 | 51.1 | 55.4 |
| | Rank | | A | A | B | A | A |

**Table 2**

| | | Unit | Ex. 6 | Ex. 7 | Ex. 8 | Ex. 9 | Ex. 10 |
|---|---|---|---|---|---|---|---|
| Primer composition No. | No. | | P-6 | P-7 | P-8 | P-9 | P-10 |
| Blend ratios in primer composition | Reactive ETFE-1 | Parts by mass | | 100 | 100 | 100 | |
| | Reactive ETFE-3 | Parts by mass | 100 | | | | |
| | Non-reactive ETFE-1 | | | | | | 100 |
| | EP-1 (concentration: 55%) | Parts by mass | 10 (5.5) | | | | 10 (5.5) |
| | EP-2 (concentration: 67%) | Parts by mass | | | | | |
| | EP-3 (concentration: 70%) | Parts by mass | | 10 (7) | | | |
| | EP-4 | Parts by mass | | | 10 | | |
| | Surfactant-1 | Parts by mass | | 2 | | 2 | 2 |
| | Surfactant-2 | Parts by mass | 2 | | 2 | | |
| | Thickener-1 (concentration: 32%) | Parts by mass | | | | | |
| | Thickener-2 | Parts by mass | | | | | |
| | Water | Parts by mass | 110 | 110 | 70 | 100 | 110 |
| | Total | Parts by mass | 222 | 222 | 182 | 202 | 222 |
| Properties of primer | Solid content | % | 48.4 | 48.4 | 61.5 | 50.5 | 48.4 |
| | Viscosity (60 rpm) | mPa·s | 55 | 132 | 1,140 | 82 | 105 |
| | Viscosity (6 rpm) | mPa·s | 80 | 220 | 2,180 | 126 | 180 |
| | TI value | | 1.7 | 1.7 | 1.9 | 1.5 | 1.7 |
| | Surface tension | mN/m | 38.4 | 30.2 | 37.8 | 29.5 | 29.4 |
| | Rank of storage stability | | C | C | C | C | C |
| Primer coating | Application times | Times | 1 | 1 | 1 | 1 | 1 |
| | Coating thickness | µm | 22 | 25 | 65 | 12 | 25 |
| | Rank of appearance | | C sagging and thickness irregularities occurred | B sagging occurred | C sagging and thickness irregularities occurred | B sagging occurred | B sagging occurred |
| Top coating | Type of ETFE | | Non-reactive ETFE-1 | Non-reactive ETFE-2 | Non-reactive ETFE-1 | Non-reactive ETFE-1 | Non-reactive ETFE-1 |
| | Application times | Times | 3 | 3 | 3 | 3 | 3 |
| | Coating thickness | µm | 390 | 400 | 382 | 360 | 400 |
| | Rank of appearance | | C | B | C | B | B |
| Peel strength | Initial | N/cm | 58.1 | 62.2 | 37.2 | 33.5 | 24.3 |
| | Rank | | A | A | B | C | C |
| | Hydrothermal resistance | N/cm | 43.4 | 29.4 | 22.1 | 12.1 | 7.7 |
| | Rank | | B | C | C | D | D |
| | Alkali resistance | N/cm | 37.6 | 33.7 | 34.2 | 8.3 | 6.5 |
| | Rank | | B | C | C | D | D |

| | | | | | | | |
|---|---|---|---|---|---|---|---|
| Reactive ETFE-1: average particle size 10 µm Reactive ETFE-2: average particle size 5 µm Reactive ETFE-3: average particle size 40 µm Non-reactive ETFE-1: TL-081, manufactured by Asahi Glass Co., Ltd., average particle size 76 µm Non-reactive ETFE-2: Z-8820X, manufactured by Asahi Glass Co., Ltd., average particle size 45 µm EP-1: Epoxy resin aqueous emulsion W1155R55, manufactured by Mitsubishi Chemical Corporation, concentration 55 mass%, average particle size 0.9 µm, epoxy equivalent 900, epoxy molecular weight 850 EP-2: Epoxy resin aqueous emulsion W3435R67, manufactured by Mitsubishi Chemical Corporation, concentration 67 mass%, average particle size 0.5 µm, epoxy equivalent 275, epoxy molecular weight 475 EP-3: Epoxy resin aqueous emulsion W2821R70, manufactured by Mitsubishi Chemical Corporation, concentration 70 mass%, average particle size 0.5 µm, epoxy equivalent 190, epoxy molecular weight 370 EP-4: Pulverized product of epoxy resin 4010P, manufactured by Mitsubishi Chemical Corporation, average particle size 56 µm, epoxy equivalent 4200, epoxy molecular weight 3,800 Surfactant-1: Dynol 604 (acetylene alcohol-type surfactant, HLB=8), manufactured by Air Products Japan, Inc. Surfactant-2: Leodol TW-L106 (polyoxyethylene sorbitan monolaurate, HLB=13), manufactured by Kao Corporation Thickener-1: Adecanol UH-756VF (polyurethane-type thickener, solid content 32 mass%), manufactured by Adeca Corporation Thickener-2: PEO-2(polyethylene oxide, molecular weight 300,000), manufactured by Sumitomo Seika Chemicals Co., Ltd. | | | | | | | |

### INDUSTRIAL APPLICABILITY

The ETFE liquid primer composition of the present invention is excellent in adhesion properties to a substrate, as compared with conventional ETFE primers. Further, the ETFE liquid primer composition of the present invention can be applied to the surface of a heat resistant substrate such as metal, glass, ceramics, etc. and is useful as a primer for lining, coating or surface treatment by ETFE.

The ETFE liquid primer composition and coated article of the present invention may be used for, for example, various containers, pipes, tubes, tanks, pipe lines, joints, rolls, autoclaves, heat exchangers, distillation towers, jigs, bulbs, stirring vanes, tanker lorries, pumps, casings for blowers, centrifugal separators, kitchen ustensils.

## Claims

1. A liquid primer composition **characterized by** comprising a powder (X) made of a reactive ethylene/tetrafluoroethylene copolymer containing repeating units (A) based on tetrafluoroethylene, repeating units (B) based on ethylene, and repeating units (C) based on a monomer having an acid anhydride residue and a polymerizable unsaturated bond, in a content ratio of (C)/((A) + (B)) being from 1/10,000 to 5/100 by molar ratio; a powder (Y) made of an epoxy resin; and water (Z); wherein the content of the powder (Y) made of an epoxy resin is from 1 to 30 parts by mass per 100 parts by mass of the powder (X) made of a reactive ethylene/tetrafluoroethylene copolymer;
wherein the monomer having an acid anhydride residue and a polymerizable unsaturated bond is selected from one or more of maleic anhydride, itaconic anhydride, citraconic anhydride, or 5-norbornene-2,3-dicarboxylic anhydride.

2. The primer composition according to Claim 1, which further contains an amine-type curing agent in an amount of less than 1 part by mass per 100 parts by mass of the powder (Y) made of an epoxy resin.

3. The primer composition according to Claim 1 or 2, wherein the epoxy equivalent of the powder (Y) made of an epoxy resin is from 200 to 2,700,
wherein the epoxy equivalent is one obtained by dividing the molecular weight of an epoxy resin by the number of epoxy groups in the molecule.

4. The primer composition according to any one of Claims 1 to 3, wherein the average particle size of the powder (X) made of a reactive ethylene/tetrafluoroethylene copolymer is from 0.1 to 100 µm, and the average particle size of the powder (Y) made of an epoxy resin is from 0.1 to 50 µm,
wherein the average particle size is obtained by dispersing each powder in a 0.1 mass% surfactant aqueous solution, and measuring by means of a laser scattering particle size distribution meter (LA-920) manufactured by Horiba, Ltd.

5. The primer composition according to any one of Claims 1 to 4, which has a viscosity of from 10 to 10,000 mPa·s as measured at 25°C at 60 rpm by means of a rotatory viscometer, and a surface tension of at most 35 mN/m,
wherein the surface tension is measured by means of a Du Nouy-type tensiometer at 25°C.

6. A laminate having a primer layer being a heat-treated product of the liquid primer composition as defined in any one of Claims 1 to 5 and a top coating layer made of a fluororesin, laminated in this order on the surface of a substrate.

7. The laminate according to Claim 6, wherein the peel strength of the top coating layer to the substrate is at least 20 N/cm,
wherein the peel strength is measured by the following method:
on the surface of a coating test specimen, by using a cutter knife, cuts are made at 10 mm intervals, whereupon a part of the top coating layer is peeled and then fixed on a chuck of a tensile tester, and the 90° peel strength is measured at a tensile speed of 50 mm/min.

## Patentansprüche

1. Flüssige Primerzusammensetzung, **dadurch gekennzeichnet, dass** sie ein Pulver (X), das aus einem reaktiven Ethylen/Tetrafluorethylen-Copolymer hergestellt ist, enthaltend Wiederholungseinheiten (A) auf Basis von Tetrafluorethylen, Wiederholungseinheiten (B) auf Basis von Ethylen und Wiederholungseinheiten (C) auf Basis eines Monomers mit einem Säureanhydridrest und einer polymerisierbaren ungesättigten Bindung in einem Gehaltverhältnis von (C)/((A) + (B)), das von 1/10000 bis 5/100 im Molverhältnis beträgt; ein Pulver (Y), das aus einem Epoxidharz hergestellt ist; und Wasser (Z) umfasst; wobei der Gehalt des Pulvers (Y), das aus einem Epoxidharz hergestellt ist, von 1 bis 30 Massenteile pro 100 Massenteile des Pulvers (X), das aus einem reaktiven Ethylen/Tetrafluorethylen-Copolymer hergestellt ist, beträgt;
wobei das Monomer mit einem Säureanhydridrest und einer polymerisierbaren ungesättigten Bindung ausgewählt ist aus einem oder mehreren von Maleinsäureanhydrid, Itaconsäureanhydrid, Citraconsäureanhydrid oder 5-Norbornen-2,3-dicarbonsäureanhydrid.

2. Primerzusammensetzung nach Anspruch 1, die ferner ein Härtungsmittel des Amin-Typs in einer Menge von weniger als 1 Massenteil pro 100 Massenteile des Pulvers (Y), das aus einem Epoxidharz hergestellt ist, enthält.

3. Primerzusammensetzung nach Anspruch 1 oder 2, wobei das Epoxidäquivalent des Pulvers (Y), das aus einem Epoxidharz hergestellt ist, von 200 bis 2700 beträgt,
wobei das Epoxidäquivalent eines ist, das durch das Dividieren des Molekulargewichts eines Epoxidharzes durch die Anzahl der Epoxidgruppen im Molekül erhalten wird.

4. Primerzusammensetzung nach einem der Ansprüche 1 bis 3, wobei die durchschnittliche Teilchengröße des Pulvers (X), das aus einem reaktiven Ethylen/Tetrafluorethylen-Copolymer hergestellt ist, von 0,1 bis 100 µm beträgt und die durchschnittliche Teilchengröße des Pulvers (Y), das aus einem Epoxidharz hergestellt ist, von 0,1 bis 50 µm beträgt,
wobei die durchschnittliche Teilchengröße erhalten wird, durch das Dispergieren jedes Pulvers in einer 0,1 Massen-%igen wässrigen Lösung eines grenzflächenaktiven Mittels und das Messen mittels eines Laserstreuungs-Teilchengrößenverteilungsmessgeräts (LA-920), hergestellt von Horiba, Ltd.

5. Primerzusammensetzung nach einem der Ansprüche 1 bis 4, die eine Viskosität von 10 bis 10000 mPa·s, wie bei 25°C bei 60 U/min mittels eines Rotationsviskosimeters gemessen, und eine Oberflächenspannung von höchstens 35 mN/m aufweist,
wobei die Oberflächenspannung mittels eines Tensiometers vom Du-Nouy-Typ bei 25°C gemessen wird.

6. Laminat mit einer Primerschicht, die ein wärmebehandeltes Produkt der flüssigen Primerzusammensetzung nach einem der Ansprüche 1 bis 5 ist, und einer oberen Deckschicht, die aus einem Fluorharz hergestellt ist, die in dieser Reihenfolge auf die Oberfläche eines Substrats laminiert sind.

7. Laminat nach Anspruch 6, wobei die Schälfestigkeit der oberen Deckschicht zum Substrat mindestens 20 N/cm beträgt,
wobei die Schälfestigkeit nach dem folgenden Verfahren gemessen wird:
auf der Oberfläche eines Beschichtungsprüfkörpers werden unter Verwendung eines Schneidmessers Schnitte in Abständen von 10 mm gemacht, woraufhin ein Teil der oberen Deckschicht geschält und dann auf einem Spannfutter eines Zugprüfers fixiert wird und die 90°-Schälfestigkeit bei einer Zuggeschwindigkeit von 50 mm/min gemessen wird.

## Revendications

1. Composition d'apprêt liquide **caractérisée en ce qu'**elle comprend une poudre (X) faite d'un copolymère d'éthylène/tétrafluoroéthylène réactif contenant des motifs répétitifs (A) à base de tétrafluoroéthylène, des motifs répétitifs (B) à base d'éthylène, et des motifs répétitifs (C) à base d'un monomère possédant un résidu anhydride d'acide et une liaison insaturée polymérisable, en un rapport des teneurs (C)/((A)+(B)) de 1/10 000 à 5/100 en moles ; une poudre (Y) faite d'une résine époxy ; et de l'eau (Z) ; dans laquelle la teneur en la poudre (Y) faite d'une résine époxy est de 1 à 30 parties en masse pour 100 parties en masse de la poudre (X) faite d'un copolymère d'éthylène/tétrafluoroéthylène réactif ;
dans laquelle le monomère possédant un résidu anhydride d'acide et une liaison insaturée polymérisable est un ou plusieurs choisi(s) parmi l'anhydride maléique, l'anhydride itaconique, l'anhydride citraconique, et l'anhydride 5-norbornène-2,3-dicarboxylique.

2. Composition d'apprêt selon la revendication 1, qui contient en outre un agent durcisseur de type amine en une quantité inférieure à 1 partie en masse pour 100 parties en masse de la poudre (Y) faite d'une résine époxy.

3. Composition d'apprêt selon la revendication 1 ou 2, dans laquelle l'équivalent époxy de la poudre (Y) faite d'une résine époxy est de 200 à 2700,
et dans laquelle l'équivalent époxy est obtenu par division de la masse moléculaire d'une résine époxy par le nombre de groupes époxy dans la molécule.

4. Composition d'apprêt selon l'une quelconque des revendications 1 à 3, dans laquelle la granulométrie moyenne de la poudre (X) faite d'un copolymère d'éthylène/ tétrafluoroéthylène réactif est de 0,1 à 100 *µ*m, et la granulométrie moyenne de la poudre (Y) faite d'une résine époxy est de 0,1 à 50 *µ*m,
et dans laquelle la granulométrie moyenne est obtenue par dispersion de chaque poudre dans une solution aqueuse de tensioactif à 0,1 % en masse, et mesure au moyen d'un dispositif de mesure de distribution de granulométrie par diffusion de laser (LA-920) fabriqué par Horiba, Ltd.

5. Composition d'apprêt selon l'une quelconque des revendications 1 à 4, qui présente une viscosité de 10 à 10 000 mPa.s telle que mesurée à 25°C et à 60 t/min au moyen d'un viscosimètre rotatif, et une tension de surface d'au plus 35 mN/m,
et dans laquelle la tension de surface est mesurée au moyen d'un tensiomètre de type Du Nouy à 25°C.

6. Stratifié possédant une couche d'apprêt qui est un produit traité à la chaleur de la composition d'apprêt liquide telle que définie dans l'une quelconque des revendications 1 à 5 et une couche de finition faite d'une résine fluorée, stratifiées dans cet ordre sur la surface d'un substrat.

7. Stratifié selon la revendication 6, dans lequel la résistance au pelage de la couche de finition par rapport au substrat est d'au moins 20 N/cm,
et dans lequel la résistance au pelage est mesurée par le procédé suivant :
sur la surface d'un échantillon de test de revêtement, par utilisation d'une lame de coupe, des découpes sont effectuées à intervalles de 10 mm, suite à quoi une partie de la couche de finition est pelée et ensuite fixée sur le mandrin d'un testeur de traction, et la résistance au pelage à 90° est mesurée à une vitesse de traction de 50 mm/min.
